# FASCICULE DE BREVET EUROPEEN

(11) **EP 1 238 863 B1**
(45) Date de publication et mention de la délivrance du brevet: **31.05.2006**
(21) Numéro de dépôt: 02290540.0
(22) Date de dépôt: 05.03.2002
(51) Int. Cl.: B60R 19/20

(54) **Elément de carrosserie à structure gonflable protégeant des chocs à basse vitesse**
Karosserieelement mit aufblasbarer Struktur zum Aufprallschutz bei geringen Geschwindigkeiten
Body element with inflatable structure protecting against low speed impacts

(30) Priorité: 05.03.2001 FR 0102974
(43) Date de publication de la demande: 11.09.2002
(73) Titulaire: Peugeot Citroen Automobiles SA, 92200 Neuilly sur Seine (FR)
(72) Inventeur: Bertrand-Belanger, Pascal, 92310 Sevres (FR)
(74) Mandataire: Bentz, Jean-Paul

(56) Documents cités:
- EP-A- 0 816 178
- DE-A- 2 053 103
- DE-A- 4 320 226
- GB-A- 2 311 966
- PATENT ABSTRACTS OF JAPAN vol. 2000, no. 09, 13 octobre 2000 (2000-10-13) & JP 2000 168473 A (NISSAN MOTOR CO LTD), 20 juin 2000 (2000-06-20)
- PATENT ABSTRACTS OF JAPAN vol. 2000, no. 07, 29 septembre 2000 (2000-09-29) & JP 2000 108824 A (OKAMURA KIYOUSUKE), 18 avril 2000 (2000-04-18)

## Description

La présente invention concerne, de façon générale, l'industrie automobile.

Plus précisément l'invention, selon un premier de ses aspects, concerne un élément de carrosserie pour véhicule automobile, comprenant une structure creuse et gonflable de protection contre les chocs, des moyens de conformation opérant sélectivement un gonflage et dégonflage de la structure creuse et la plaçant respectivement dans une configuration déployée et dans une configuration repliée, un logement recevant la structure creuse dans sa configuration repliée et présentant une ouverture de hauteur maximale déterminée, et des premier et second volets dont chacun adopte sélectivement une position de fermeture dans laquelle il obture au moins partiellement l'ouverture du logement, et une position d'ouverture dans laquelle il dégage l'ouverture.

Un dispositif de ce type est par exemple décrit dans le document de brevet DE-A- 43 20 226 pour l'application privilégiée que constitue la protection des piétons.

En réalité, l'augmentation substantielle du nombre de véhicules circulant en zone urbaine, ainsi que la diversification du parc automobile, qui oblige notamment les véhicules de petite taille à vocation citadine ou sportive à côtoyer les véhicules monospaces et les véhicules à transmission intégrale et garde au sol importante, font aujourd'hui apparaître les limites des systèmes traditionnels de protection des carrosseries contre les chocs, en particulier à basse vitesse.

Par exemple, lorsqu'un véhicule tout-terrain équipé d'un pare-buffle se gare immédiatement devant ou derrière un coupé surbaissé, il est n'est pas rare que ce dernier subisse un dommage de carrosserie plus ou moins important.

Aussi les besoins en protection d'un véhicule sont-ils relativement fréquents.

Dans ce contexte, l'invention a précisément pour but de proposer un élément de carrosserie, intégrant une structure de protection gonflable et dégonflable, propre à assurer une protection renforcée de la carrosserie d'un véhicule, en particulier contre les chocs à basse vitesse, et qui peut être utilisée à fréquence élevée sans risque de détérioration en cours de manoeuvre.

A cette fin, l'élément de carrosserie de l'invention, par ailleurs conforme à la définition générique qu'en donne le préambule ci-dessus, est essentiellement caractérisé en ce qu'il comprend en outre des moyens d'actionnement plaçant sélectivement les volets dans leur position d'ouverture avant le gonflage de la structure creuse et plaçant sélectivement les volets dans leur position de fermeture après le dégonflage de la structure creuse.

Dans le mode de réalisation préféré de l'invention, la structure creuse, dans sa configuration déployée, présente en dehors du logement une hauteur supérieure à la hauteur maximale de l'ouverture de ce logement.

Les premier et second volets sont par exemple articulés sur des premier et second bords respectifs de l'ouverture.

Dans sa configuration déployée, la structure creuse présente avantageusement une hauteur au moins égale au double de la hauteur maximale de l'ouverture du logement.

La section transversale de la structure creuse peut présenter une base centrale et deux ailes latérales disposées en T, la base centrale de cette section restant de préférence dans le logement pour la configuration déployée de la structure creuse.

Pour préserver le style du véhicule, il est avantageux de prévoir que la structure creuse et chaque volet épousent le galbe de ce véhicule.

De préférence, les premier et second volets, dans leur position de fermeture, forment ensemble un pare-chocs standard.

Les moyens d'actionnement comprennent avantageusement une liaison mécanique entre les volets, rendant la position de chaque volet dépendante de la position de l'autre volet.

Les moyens de conformation comprennent de préférence une pompe à double effet dont une sortie de refoulement est reliée à la structure gonflable par un premier conduit et dont une entrée d'aspiration est reliée à la structure gonflable par un second conduit.

Dans ce cas, les moyens d'actionnement peuvent comprendre un vérin pneumatique interposé sur le premier conduit, sélectivement actionné par la pression dans ce premier conduit, et reliant sélectivement, à la fin de son actionnement, la structure gonflable à la sortie de refoulement de la pompe, un distributeur pneumatique commandé par la pression dans le second conduit et reliant le vérin à l'entrée d'aspiration de la pompe après le dégonflage de la structure gonflable, et des clapets anti-retour installés sur les premier et second conduits dans un sens passant depuis la sortie de refoulement en direction de l'entrée d'aspiration de la pompe, le vérin actionnant lui-même l'un au moins des volets.

En variante, les moyens d'actionnement peuvent comprendre un moteur électrique et / ou un électro-aimant.

L'élément de carrosserie peut aussi bien être appliqué à la protection d'une partie avant, latérale, et / ou arrière d'un véhicule qu'à la protection d'un obstacle fragile sur la trajectoire d'un véhicule, par exemple un piéton.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique et en coupe partielle d'un élément de carrosserie conforme à l'invention, représenté dans sa configuration repliée;
- la figure 2 est une vue externe d'un véhicule équipé de l'élément de carrosserie illustré à la figure 1 et également représenté en configuration repliée;
- la figure 3 est une vue schématique et en coupe partielle d'un élément de carrosserie conforme à l'invention, représenté dans sa configuration déployée;
- la figure 4 est une vue externe d'un véhicule équipé de l'élément de carrosserie illustré à la figure 3 et également représenté en configuration déployée;
- la figure 5 est une vue schématique partielle d'un élément de carrosserie conforme à l'invention, représenté dans sa configuration de repos;
- la figure 6 est une vue schématique partielle d'un élément de carrosserie conforme à l'invention, sur laquelle les volets sont représentés en position d'ouverture et la structure gonflable en configuration repliée;
- la figure 7 est une vue schématique partielle d'un élément de carrosserie conforme à l'invention, représenté dans sa configuration activée;
- la figure 8 est une vue schématique partielle et en perspective d'un élément de carrosserie conforme à l'invention, représenté dans sa configuration activée;
- la figure 9 est un schéma représentant un élément de carrosserie conforme à l'invention, représenté dans un état évoluant vers sa configuration activée; et
- la figure 10 est un schéma représentant un élément de carrosserie conforme à l'invention, représenté dans un état évoluant vers sa configuration de repos.

Comme annoncé précédemment, l'élément de carrosserie de l'invention, qui permet notamment de protéger la partie avant et / ou la partie arrière d'un véhicule V contre les chocs, comprend une structure creuse et gonflable 1.

Cet élément comprend en outre un dispositif 2 pour gonfler et dégonfler à volonté cette structure creuse 1, un logement 3, et un ou plusieurs volets tels que 41 et 42, la structure creuse étant par exemple constituée par un sac souple et étanche.

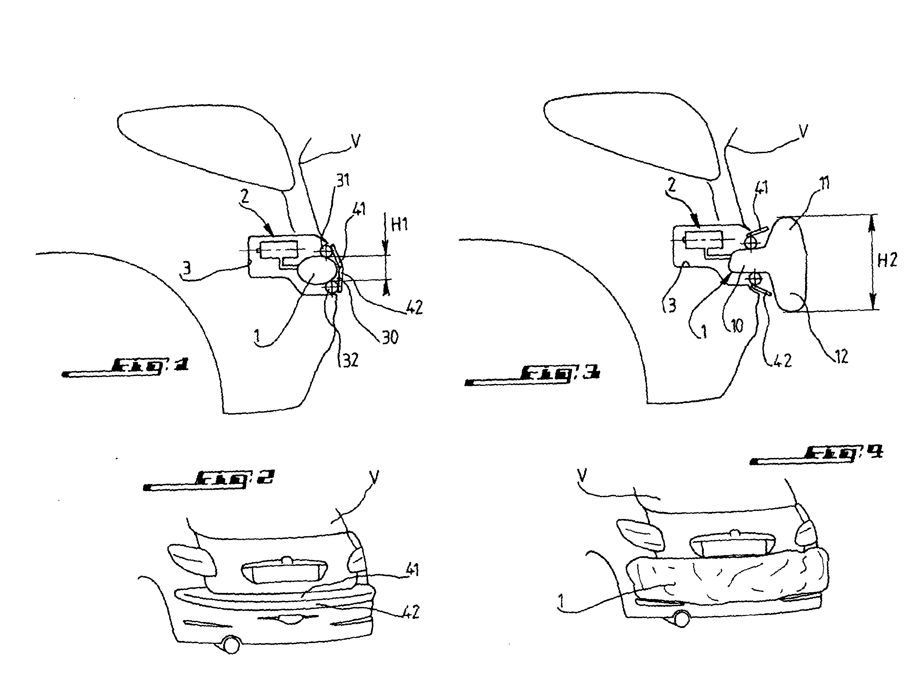

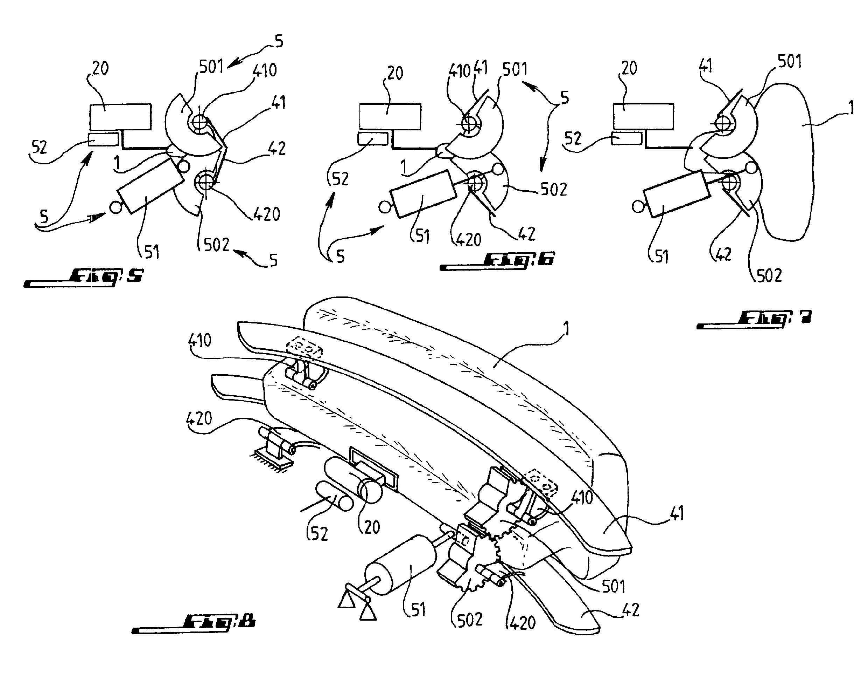

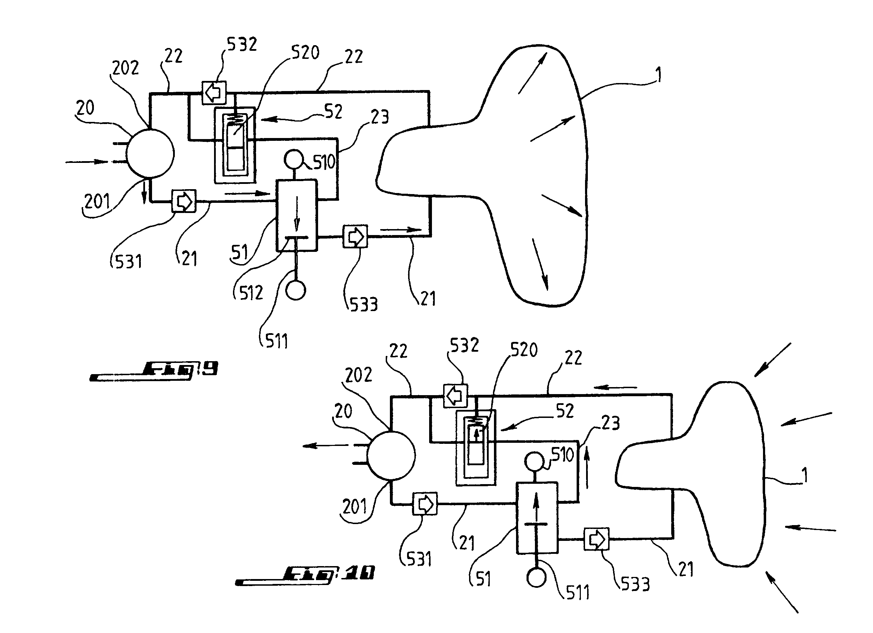

Le dispositif 2 de gonflage et dégonflage, adéquatement constitué par une pompe à double effet 20, permet, par gonflage, de placer le sac 1 dans une configuration déployée (figures 3 et 4), et, par dégonflage, de le placer dans une configuration repliée pour laquelle ce sac est reçu dans le logement 3 (figures 1 et 2).

Chacun des volets tels que 41 et 42 peut adopter une position de fermeture, dans laquelle il obture au moins partiellement l'ouverture 30 de ce logement 3.

Dans cette position, les volets 41 et 42 forment ensemble un pare-chocs traditionnel pour le véhicule V, comme le montre la figure 2.

Chacun des volets tels que 41 et 42 peut aussi adopter une position d'ouverture, dans laquelle il libère totalement l'ouverture 30 du logement 3.

Pour ce faire, chacun de ces volets est articulé sur un bord d'articulation correspondant, tel que 31 et 32, de l'ouverture 3, au moyen de charnières correspondantes, telles que 410 et 420.

Chaque volet peut être élastiquement sollicité vers sa position de fermeture par un ressort de rappel (non visible) par exemple installé sur le bord d'articulation correspondant.

Il peut être avantageux de prévoir que la force de rappel exercée par chaque ressort sur le volet correspondant soit suffisante pour permettre au sac 1 replié dans le logement 3 de conserver une pression résiduelle de gonflage non nulle et, corrélativement, de renforcer le logement 3 et le pare-chocs que forment ensemble les volets 41 et 42 en position de fermeture.

Le sac 1 et les volets 41 et 42 sont de préférence conformés pour épouser fidèlement le galbe du véhicule V, et peuvent à cette fin être réalisés en plusieurs parties.

Comme le montrent les figures 1 et 3, le sac 1, dans sa configuration déployée, présente une hauteur H2 supérieure à la hauteur maximale H1 de l'ouverture 30 du logement 3, et de préférence même égale au moins au double de la hauteur maximale H1 de cette ouverture 30.

Comme le montre par ailleurs la figure 3, le sac 1 présente avantageusement une section transversale en forme de T, composée de deux ailes latérales 11 et 12 recouvrant notamment les volets 41 et 42, et d'une base centrale 10 qui reste en permanence dans le logement 3 au moins en partie, y compris lorsque le sac 1 se trouve déployé.

En plus de la structure creuse 1, des moyens de conformation 2, du logement 3, et des volets 41 et 42, l'élément de carrosserie selon l'invention comprend des moyens d'actionnement 5 qui ont pour fonction de placer les volets 41 et 42 dans leur position d'ouverture avant le gonflage de la structure creuse 1, et de placer ces volets dans leur position de fermeture après le dégonflage de la structure creuse 1.

Les moyens d'actionnement 5 comprennent de préférence une liaison mécanique permettant de coordonner les mouvements effectués par les volets 41 et 42 entre leurs positions d'ouverture et de fermeture.

Par exemple, les volets 41 et 42 sont respectivement solidaires en rotation, autour de leurs charnières correspondantes 410 et 420, de pignons ou secteurs de pignons 501 et 502 engrenés l'un avec l'autre pour rendre la position de chaque volet dépendante de la position de l'autre volet.

La sortie de refoulement 201 de la pompe 20 à double effet est reliée à la structure gonflable 1 par un premier conduit 21, tandis que l'entrée d'aspiration 202 de cette pompe est reliée à la structure gonflable 1 par un second conduit 22.

Bien que les moyens d'actionnement 5 puissent comprendre un électro-aimant ou un moteur électrique associé à une timonerie à pignons, les figures 5, 6, 7, 9, et 10 illustrent un mode de réalisation utilisant essentiellement des organes pneumatiques.

Dans ce mode de réalisation, les moyens d'actionnement 5 comprennent essentiellement un vérin pneumatique 51, un distributeur pneumatique 52, et des clapets anti-retour 531 à 533, ces derniers étant installés sur les conduits haute et basse pression 21 et 22 dans un sens passant suivant une direction de pression décroissante, c'est-à-dire depuis la sortie de refoulement 201 de la pompe 20 en direction de l'entrée d'aspiration 202 de cette pompe.

Le vérin pneumatique 51 (figures 8 à 10), qui est destiné à actionner l'un au moins des volets 41 et 42 directement ou par l'intermédiaire de la liaison mécanique 501, 502, présente par exemple une extrémité de fixation 510 et une tige d'actionnement 511 reliée à un piston 512.

Lorsque la pompe 20 est commandée dans le sens du gonflage (figure 9), le vérin 51, qui est interposé sur le conduit haute pression 21, est actionné par la pression dans ce conduit 21 et ouvre les volets 41 et 42.

A la fin de l'actionnement du vérin 51, le piston 512 dégage la portion du conduit 21 qui débouche dans la structure gonflable 1, de sorte que celle-ci reçoit l'air expulsé à la sortie de refoulement 201 de la pompe 20 et se gonfle.

Le distributeur pneumatique 52 est installé sur un conduit de contournement 23 reliant le vérin 51 à l'entrée d'aspiration 202 de la pompe 20, et est commandé par la pression régnant dans le conduit basse pression 22.

Lorsque la pompe 20 est commandée dans le sens du dégonflage (figure 10), la structure gonflable 1 est dégonflée par la pompe à travers le conduit 22.

Lorsque cette structure est totalement dégonflée, le tiroir 520 du distributeur 52 est aspiré par la basse pression régnant dans le conduit 22 et met le vérin 51 en communication avec l'entrée d'aspiration 202 de la pompe à travers le conduit 23, le vérin retournant alors à sa position de repos et refermant les volets 41 et 42.

La séquence de fonctionnement de l'élément de carrosserie de l'invention est illustrée par la succession des figures 5 à 7.

Au repos (figure 5), les volets 41 et 42 sont fermés et la structure 1 est repliée dans le logement 3.

En cas d'actionnement de cet élément (figure 6), les volets 41 et 42 sont placés en position d'ouverture, puis la structure 1 est gonflée (figure 7).

Pour le retour à la position de repos, la structure 1 est d'abord dégonflée (figure 6), puis les volets sont refermés (figure 5).

L'élément de carrosserie ainsi conçu peut assurer la protection de la partie avant d'un véhicule V, de sa partie arrière, de ses côtés, ou de plusieurs de ces parties.

Avant de se garer, le conducteur du véhicule commande, par exemple au moyen d'un interrupteur prévu sur le tableau de bord du véhicule ou d'une télécommande intégrée à la clef de ce véhicule, le déclenchement des moyens d'actionnement 5 et de la pompe 20.

Les volets 41 et 42 sont alors ouverts, puis le sac 1 est gonflé jusqu'à être placé dans sa configuration déployée illustrée aux figures 3 et 4.

Cette configuration est conservée au moins pendant tout le temps que dure le stationnement du véhicule pour protéger ce dernier de toute rayure ou enfoncement qui, en l'absence de ce sac, pourraient être provoqués par un véhicule voisin, après quoi un nouveau déclenchement des moyens d'actionnement 5 et de la pompe 20 permet d'obtenir la fermeture des volets 41 et 42, puis le dégonflage du sac 1, qui réintègre ainsi le logement 3.

L'élément de carrosserie de l'invention présente de nombreux avantages.

Dans la mesure où la pression du sac 1 suffit à absorber tous les efforts appliqués sur la carrosserie du véhicule, cet élément est très robuste, tout en étant compact et discret.

La simplicité de son mécanisme d'actionnement, qui se réduit au gonflage et au dégonflage du sac 1, le rend par ailleurs relativement peu coûteux et fiable.

D'autre part encore, cet élément de carrosserie respecte intégralement le style du véhicule et, en dehors du jeu minime que peuvent présenter entre eux les volets 41 et 42 en position de fermeture, peut aisément passer, en configuration repliée, pour un pare-chocs standard.

En variante, les volets 41 et 42 pourraient être remplacés par un volet unique, de largeur suffisante pour pouvoir obstruer l'ouverture 30.

Mais l'élément de carrosserie de l'invention présente un autre avantage significatif, à savoir la grande capacité d'amortissement que présente le sac 1 en configuration déployée et qui le rend également applicable à la protection d'un obstacle fragile qui pourrait se trouver sur la trajectoire d'un véhicule V.

Cet élément peut ainsi être couplé à des capteurs de mouvement et de proximité de même qu'à un dispositif de gonflage pyrotechnique du sac 1 de manière à protéger d'un choc imminent non seulement le véhicule V lui-même, mais aussi, par exemple, les jambes d'un piéton et les bornes en béton.

## Revendications

1. Elément de carrosserie pour véhicule automobile, comprenant une structure creuse (1) et gonflable de protection contre les chocs, des moyens de conformation (2) opérant sélectivement un gonflage et dégonflage de la structure creuse (1) et la plaçant respectivement dans une configuration déployée et dans une configuration repliée, un logement (3) recevant la structure creuse (1) dans sa configuration repliée et présentant une ouverture (30) de hauteur maximale déterminée (H1), et des premier et second volets (41, 42) dont chacun adopte sélectivement une position de fermeture dans laquelle il obture au moins partiellement l'ouverture (30) du logement (3), et une position d'ouverture dans laquelle il dégage l'ouverture (30), **caractérisé en ce qu'**il comprend en outre des moyens d'actionnement (5) plaçant sélectivement les volets (41, 42) dans leur position d'ouverture avant le gonflage de la structure creuse (1) et plaçant sélectivement les volets (41, 42) dans leur position de fermeture après le dégonflage de la structure creuse (1).

2. Elément de carrosserie suivant la revendication 1, **caractérisé en ce que** la structure creuse (1), dans sa configuration déployée, présente en dehors du logement (3) une hauteur (H2) supérieure à la hauteur maximale (H1) de l'ouverture (30) de ce logement (3).

3. Elément de carrosserie suivant la revendication 1 ou 2, **caractérisé en ce que** les premier et second volets (41, 42) sont articulés sur des premier et second bords respectifs (31, 32) de l'ouverture (3).

4. Elément de carrosserie suivant l'une quelconque des revendications précédentes, **caractérisé en ce que** la structure creuse (1), dans sa configuration déployée, présente une hauteur (H2) au moins égale au double de la hauteur maximale (H1) de l'ouverture (30) du logement (3).

5. Elément de carrosserie suivant l'une quelconque des revendications précédentes, **caractérisé en ce qu'**une section transversale de la structure creuse (1) présente une base centrale (10) et deux ailes latérales (11, 12) disposées en T, et **en ce que** la base centrale (10) de cette section reste dans le logement (3) pour la configuration déployée de la structure creuse (1).

6. Elément de carrosserie suivant l'une quelconque des revendications précédentes, **caractérisé en ce que** la structure creuse (1) et chaque volet (41, 42) épousent le galbe du véhicule (V).

7. Elément de carrosserie suivant l'une quelconque des revendications précédentes, **caractérisé en ce que** les premier et second volets (41, 42), dans leur position de fermeture, forment ensemble un pare-chocs.

8. Elément de carrosserie suivant l'une quelconque des revendications précédentes combinée à la revendication 3, **caractérisé en ce que** les moyens d'actionnement (5) comprennent une liaison mécanique (501, 502) entre les volets (41, 42), rendant la position de chaque volet (41, 42) dépendante de la position de l'autre volet (42, 41).

9. Elément de carrosserie suivant l'une quelconque des revendications précédentes, **caractérisé en ce que** les moyens de conformation (2) comprennent une pompe à double effet (20) dont une sortie de refoulement (201) est reliée à la structure gonflable (1) par un premier conduit (21) et dont une entrée d'aspiration (202) est reliée à la structure gonflable (1) par un second conduit (22).

10. Elément de carrosserie suivant la revendication 9, **caractérisé en ce que** les moyens d'actionnement (5) comprennent un vérin pneumatique (51) interposé sur le premier conduit (21), sélectivement actionné par la pression dans ce premier conduit (21), et reliant sélectivement, à la fin de son actionnement, la structure gonflable (1) à la sortie de refoulement (201) de la pompe (20), un distributeur pneumatique (52) commandé par la pression dans le second conduit (22) et reliant le vérin (51) à l'entrée d'aspiration (202) de la pompe (20) après le dégonflage de la structure gonflable (1), et des clapets anti-retour (531 à 533) installés sur les premier et second conduits (21, 22) dans un sens passant depuis la sortie de refoulement (201) en direction de l'entrée d'aspiration (202) de la pompe (20), le vérin (51) actionnant lui-même l'un au moins des volets (41, 42).

11. Elément de carrosserie suivant la revendication 9, **caractérisé en ce que** les moyens d'actionnement (5) comprennent un moteur électrique.

12. Elément de carrosserie suivant la revendication 9, **caractérisé en ce que** les moyens d'actionnement (5) comprennent un électro-aimant.

13. Application d'un élément de carrosserie suivant l'une quelconque des revendications précédentes à la protection d'une partie avant, latérale, et / ou arrière d'un véhicule (V).

14. Application d'un élément de carrosserie suivant l'une quelconque des revendications 1 à 12 à la protection d'un obstacle fragile sur la trajectoire d'un véhicule (V).

## Claims

1. Bodywork element for motor vehicle, including a hollow inflatable structure (1) for protection against impacts, conformation means (2) selectively effecting inflation and deflation of the hollow structure (1) and placing it in an unfolded configuration and a folded configuration respectively, a housing (3) accommodating the hollow structure (1) in its folded configuration and having an opening (30) of a predetermined maximum height (H1), and first and second flaps (41, 42) each of which selectively adopts a closed position in which it closes at least partially the opening (30) in the housing (3), and an open position in which it leaves the opening (30) clear, **characterised in that** it also includes actuation means (5) selectively placing the flaps (41, 42) in their open position before inflation of the hollow structure (1) and selectively placing the flaps (41, 42) in their closed position after deflation of the hollow structure (1).

2. Bodywork element according to claim 1, **characterised in that** the hollow structure (1), in its unfolded configuration, has outside the housing (3) a height (H2) greater than the maximum height (H1) of the opening (30) of this housing (3).

3. Bodywork element according to claim 1 or claim 2, **characterised in that** the first and second flaps (41, 42) are articulated around first and second edges (31, 32) respectively of the opening (3).

4. Bodywork element according to any one of the preceding claims, **characterised in that** the hollow structure (1), in its unfolded configuration, is of a height (H2) which is at least double the maximum height (H1) of the opening (30) in the housing (3).

5. Bodywork element according to any one of the preceding claims, **characterised in that** a transverse section of the hollow structure (1) has a central base (10) and two lateral wings (11, 12) arranged in a T, and **in that** the central base (10) of this section remains in the housing (3) when the hollow structure (1) is in its unfolded configuration.

6. Bodywork element according to any one of the preceding claims, **characterised in that** the hollow structure (1) and each flap (41, 42) follow the outline of the vehicle (V).

7. Bodywork element according to any one of the preceding claims, **characterised in that** the first and second flaps (41, 42), in their closed position, together form a bumper.

8. Bodywork element according to any one of the preceding claims combined with claim 3, **characterised in that** the actuation means (5) includes a mechanical linkage (501, 502) between the flaps (41, 42), making the position of each flap (41, 42) dependent on the position of the other flap (42, 41).

9. Bodywork element according to any one of the preceding claims, **characterised in that** the conformation means (2) include a double action pump (20) with a discharge outlet (201) connected to the inflatable structure (1) by a first conduit (21) and an aspiration inlet (202) connected to the inflatable structure (1) by a second conduit (22).

10. Bodywork element according to claim 9, **characterised in that** the actuation means (5) includes a pneumatic cylinder (51) inserted in the first conduit (21), selectively actuated by the pressure in this first conduit (21), and selectively connecting, at the end of its actuation, the inflatable structure (1) to the discharge outlet (201) of the pump (20), a pneumatic distributor (52) controlled by the pressure in the second conduit (22) and connecting the pneumatic cylinder (51) to the aspiration inlet (202) of the pump (20) after deflation of the inflatable structure (1), and non-return valves (531 to 533) fitted to the first and second conduits (21, 22) in a direction running from the discharge outlet (201) toward the aspiration inlet (202) of the pump (20), the pneumatic cylinder (51) itself actuating at least one of the flaps (41, 42).

11. Bodywork element according to claim 9, **characterised in that** the actuation means (5) includes an electric motor.

12. Bodywork element according to claim 9, **characterised in that** the actuation means (5) includes an electromagnet.

13. Application of a bodywork element according to any one of the preceding claims to the protection of a front, side and/or rear part of a vehicle (V).

14. Application of a bodywork element according to any one of claims 1 to 12 to the protection of a fragile obstacle in the trajectory of a vehicle (V).

## Patentansprüche

1. Karosserieteil für Kraftfahrzeuge, mit einer hohlen, aufblasbaren Struktur (1) zum Schutz vor Stößen, Formungsmitteln (2), die selektiv ein Aufblasen und Entleeren der Hohlstruktur (1) bewirken und diese in eine entfaltete Gestalt bzw. in eine zusammengefaltete Gestalt bringen, einer Aufnahme (3), welche die Hohlstruktur (1) in ihrer zusammengefalteten Gestalt aufnimmt und eine Öffnung (30) mit bestimmter maximaler Höhe (H1) aufweist, und einer ersten und zweiten Klappe (41, 42), von denen jede selektiv eine geschlossene Stellung, in welcher sie zumindest teilweise die Öffnung (30) der Aufnahme (3) verschließt, und eine geöffnete Stellung einnimmt, in welcher sie die Öffnung (30) freigibt, **dadurch gekennzeichnet, dass** es ferner Betätigungsmittel (5) enthält, welche die Klappen (41, 42) vor dem Aufblasen der Hohlstruktur (1) selektiv in ihre geöffnete Stellung bringen und die Klappen (41, 42) nach dem Entleeren der Hohlstruktur (1) selektiv in ihre geschlossene Stellung bringen.

2. Karosserieteil nach Anspruch 1, **dadurch gekennzeichnet, dass** die Hohlstruktur (1) in ihrer entfalteten Gestalt außerhalb der Aufnahme (3) eine Höhe (H2) aufweist, die größer ist als die maximale Höhe (H1) der Öffnung (30) dieser Aufnahme (3).

3. Karosserieteil nach Anspruch 1 oder 2, **dadurch gekennzeichnet, dass** die erste und die zweite Klappe (41, 42) an einem ersten und einem zweiten jeweiligen Rand (31, 32) der Öffnung (3) angelenkt sind.

4. Karosserieteil nach einem der vorangehenden Ansprüche, **dadurch gekennzeichnet, dass** die Hohlstruktur (1) in ihrer entfalteten Gestalt eine Höhe (H2) aufweist, die zumindest gleich der zweifachen maximalen Höhe (H1) der Öffnung (30) der Aufnahme (3) ist.

5. Karosserieteil nach einem der vorangehenden Ansprüche, **dadurch gekennzeichnet, dass** ein Querschnitt der Hohlstruktur (1) eine mittlere Basis (10) und zwei Seitenflügel (11, 12) aufweist, die T-förmig angeordnet sind, und dass die mittlere Basis (10) dieses Querschnitts bei der entfalteten Gestalt der Hohlstruktur (1) in der Aufnahme (3) verbleibt.

6. Karosserieteil nach einem der vorangehenden Ansprüche, **dadurch gekennzeichnet, dass** die Hohlstruktur (1) und jede Klappe (41, 42) sich an die Kontur des Fahrzeugs (V) anpassen.

7. Karosserieteil nach einem der vorangehenden Ansprüche, **dadurch gekennzeichnet, dass** die erste und die zweite Klappe (41, 42) in ihrer geschlossenen Stellung zusammen einen Stoßfänger bilden.

8. Karosserieteil nach einem der vorangehenden Ansprüche in Kombination mit Anspruch 3, **dadurch gekennzeichnet, dass** die Betätigungsmittel (5) eine mechanische Verbindung (501, 502) zwischen den Klappen (41, 42) enthalten, welche die Stellung einer jeden Klappe (41, 42) von der Stellung der jeweils anderen Klappe (42, 41) abhängig macht.

9. Karosserieteil nach einem der vorangehenden Ansprüche, **dadurch gekennzeichnet, dass** die Formungsmittel (2) eine doppelt wirkende Pumpe (20) enthalten, deren Druckauslass (201) über eine erste Leitung (21) mit der aufblasbaren Struktur (1) verbunden ist und deren Saugeinlass (202) über eine zweite Leitung (22) mit der aufblasbaren Struktur (1) verbunden ist.

10. Karosserieteil nach Anspruch 9, **dadurch gekennzeichnet, dass** die Betätigungsmittel (5) einen pneumatischen Zylinder (51) enthalten, der an der ersten Leitung (21) eingefügt ist, selektiv über den Druck in dieser ersten Leitung (21) betätigt wird und am Ende seiner Betätigung selektiv die aufblasbare Struktur (1) mit dem Druckauslass (201) der Pumpe (20) verbindet, sowie ein Druckluftwegeventil (52), das von dem Druck in der zweiten Leitung (22) gesteuert wird und nach Entleeren der aufblasbaren Struktur (1) den Zylinder (51) mit dem Saugeinlass (202) der Pumpe (20) verbindet, und Rückschlagventile (531 bis 533), die an der ersten und der zweiten Leitung (21, 22) in einer von dem Druckauslass (201) zum Saugeinlass (20) der Pumpe (20) durchgängigen Richtung angebracht sind, wobei der Zylinder (51) selbst zumindest die eine Klappe (41, 42) betätigt.

11. Karosserieteil nach Anspruch 9, **dadurch gekennzeichnet, dass** die Betätigungsmittel (5) einen Elektromotor enthalten.

12. Karosserieteil nach Anspruch 9, **dadurch gekennzeichnet, dass** die Betätigungsmittel (5) einen Elektromagneten enthalten.

13. Anwendung eines Karosserieteils nach einem der vorangehenden Ansprüche zum Schutz eines Front-, Seiten- und/oder Heckabschnitts eines Fahrzeugs (V).

14. Anwendung eines Karosserieteils nach einem der Ansprüche 1 bis 12 zum Schutz eines verletzbaren Hindernisses auf der Wegstrecke eines Fahrzeugs (V).
